Europäisches Patentamt

European Patent Office

Office européen des brevets

(11) Veröffentlichungsnummer: **0 469 448 A1**

## (12) EUROPÄISCHE PATENTANMELDUNG

(21) Anmeldenummer: **91112396.6**

(51) Int. Cl.5: **G01F 1/84**

(22) Anmeldetag: **24.07.91**

(30) Priorität: **28.07.90 DE 4023989**

(43) Veröffentlichungstag der Anmeldung:
**05.02.92 Patentblatt 92/06**

(84) Benannte Vertragsstaaten:
**AT BE CH DE DK ES FR GB GR IT LI LU NL SE**

(71) Anmelder: **KROHNE MESSTECHNIK MASSAMETRON GmbH & Co. KG**
**Friedhofstrasse 30**
**W-7401 Pliezhausen(DE)**

(72) Erfinder: **Lam, Son, Dipl.-Ing.**
**Kirchstrasse 5**
**W-7432 Bad Urach(DE)**
Erfinder: **Christ, Herbert, Dipl.-Ing.**
**Heidenheimerstrasse 47**
**W-7410 Reutlingen(DE)**
Erfinder: **Heisig, Rolf, Dr. Dipl.-Ing.**
**Salmstrasse 4**
**W-7410 Reutlingen-Altenburg(DE)**

(74) Vertreter: **Gesthuysen, Hans Dieter, Dipl.-Ing. et al**
**Patentanwälte Gesthuysen + von Rohr**
**Huyssenallee 15 Postfach 10 13 33**
**W-4300 Essen 1(DE)**

(54) **Massendurchflussmessgerät.**

(57) Dargestellt und beschrieben ist ein Massendurchflußmeßgerät für strömende Medien, das primär nach dem Coriolis-Prinzip arbeitet, mit einem Leitungseinlauf, mit einer das strömende Medium führenden, geraden Leitung (1), mit einem Leitungsauslauf, mit einem auf die Leitung (1) einwirkenden Schwingungserzeuger (2) und mit zwei - vorzugsweise Coriolis-Kräfte und/oder auf Corioliskräften beruhende Coriolisschwingungen erfassenden - Meßwertaufnehmern (3).

Das erfindungsgemäße Massendurchflußmeßgerät hat bei einer bestimmten Baulänge eine relativ geringe Eigenfrequenz bzw. bei einer bestimmten Eigenfrequenz eine relativ geringe Baulänge, und zwar dadurch, daß der Schwingungserzeuger (2) über einen Pendelarm (4) an der Leitung (1) angreift, daß also die Leitung (1) zu Torsionsschwingungen und zu Biegeschwingungen angeregt wird.

Die Erfindung betrifft ein Massendurchflußmeßgerät für strömende Medien, das primär nach dem Coriolis-Prinzip arbeitet, mit einem Leitungseinlauf, mit mindestens einer das strömende Medium führenden, zumindest im wesentlichen geraden Leitung, mit einem Leitungsauslauf, mit mindestens einem auf die Leitung einwirkenden Schwingungserzeuger und mit mindestens einem - vorzugsweise Corioliskräfte und/oder auf Corioliskräften beruhende Coriolisschwingungen erfassenden - Meßwertaufnehmer.

Massendurchflußmeßgeräte für strömende Medien, die nach dem Coriolis-Prinzip arbeiten, sind in verschiedenen Ausführungen bekannt (vgl. z. B. die DE-OSen 26 29 833, 28 22 087, 28 33 037, 29 38 498, 30 07 361, 33 29 544, 34 43 234, 35 03 841, 35 05 166, 35 26 297, 37 07 777, 39 16 285 und 40 16 907, die EP-OSen 0 083 144, 0 109 218, 0 119 638, 0 185 709, 0 196 150, 0 210 308, 0 212 782, 0 235 274, 0 239 679, 0 243 468, 0 244 692, 0 250 706, 0 271 605, 0 275 367 und 0 282 552 sowie die US-PSen 4,491,009, 4,628,744 und 4,666,421) und finden in zunehmendem Maße in der Praxis Verwendung.

Bei Massendurchflußmeßgeräten für strömende Medien, die nach dem Coriolis-Prinzip arbeiten, unterscheidet man grundsätzlich zwischen einerseits solchen, deren Leitung als gerades Rohr ausgeführt sind, und andererseits solchen, deren Leitung als - einfach oder mehrfach - gebogenes Rohr, auch als Rohrschleife, ausgeführt sind. Außerdem unterscheidet man bei den in Rede stehenden Massendurchflußmeßgeräten zwischen einerseits solchen, die nur eine Leitung aufweisen, und andererseits solchen, die zwei Leitungen aufweisen; bei den Ausführungen mit zwei Leitungen können diese strömungstechnisch in Reihe oder parallel zueinander liegen. Alle Ausführungsformen haben Vorteile und Nachteile.

Ausführungsformen von Massendurchflußmeßgeräten, bei denen die Leitung als gerades Rohr ausgeführt ist bzw. die Leitungen als gerade Rohre ausgeführt sind, sind in Bezug auf den mechanischen Aufbau einfach und folglich mit relativ geringen Kosten herzustellen; dabei sind auch die Rohrinnenflächen gut bearbeitbar, z. B. polierbar. Im übrigen haben sie einen geringen Druckverlust. Nachteilig ist dabei, daß sie bei einer bestimmten Baulänge eine relativ hohe Eigenfrequenz haben. Ausführungsformen von Massendurchflußmeßgeräten, bei denen die Leitung als gebogenes Rohr ausgeführt ist bzw. die Leitungen als gebogene Rohre ausgeführt sind, haben unter den Gesichtspunkten, unter denen Ausführungsformen mit einem geraden Rohr bzw. mit geraden Rohren Vorteile haben, Nachteile; vorteilhaft ist dabei jedoch, daß sie bei einer bestimmten Baulänge eine relativ niedrige Eigenfrequenz haben.

Der Erfindung liegt nun die Aufgabe zugrunde, eine Massendurchflußmeßgerät mit mindestens einer zumindest im wesentlichen geraden Leitung anzugeben, das bei einer bestimmten Baulänge eine relativ geringe Eigenfrequenz hat bzw. bei einer bestimmten Eigenfrequenz mit einer relativ geringen Baulänge realisiert werden kann.

Das erfindungsgemäße Massendurchflußmeßgerät, bei dem die zuvor hergeleitete und dargelegte Aufgabe gelöst ist, ist nun zunächst und im wesentlichen dadurch gekennzeichnet, daß der Schwingungserzeuger über einen Pendelarm an der Leitung angreift. Während bei den bekannten Massendurchflußmeßgeräten mit mindestens einer zumindest in wesentlichen gerade Leitung der Schwingungserzeuger direkt an der Leitung angreift und damit die Leitung - zumindest fast ausschließlich - zu Biegeschwingungen anregt, führt die erfindungsgemäße Maßnahme, wonach der Schwingungserzeuger über einen Pendelarm an der Leitung angreift, dazu, daß die Leitung zu Torsionsschwingungen und zu Biegeschwingungen angeregt wird. Wesentlich ist dabei, daß die für die Torsionsschwingungen relevante Eigenfrequenz wesentlich geringer ist als die für die Biegeschwinnungen relevante Eigenfrequenz und beeinflußt werden kann, ohne die Länge, die Masse und/oder die Steifigkeit der Leitung zu beeinflussen, nämlich über den Pendelarm, d. h. über die Masse des Pendelarms und über den Abstand zwischen der Längsachse der Leitung und der Masse des Pendelarms.

Massendurchflußmeßgeräte der in Rede stehenden Art werden in der Regel in Resonanz betrieben. Das hat einerseits den Vorteil, daß die Anregung mit minimalem Energieaufwand betrieben werden kann. Andererseits ist der Betrieb in Resonanz Voraussetzung dafür, daß mit einem solchen Massendurchflußmeßgerät auch die Dichte des strömenden Mediums bestimmt werden kann. Tatsächlich werden Massendurchflußmeßgeräte der in Rede stehenden Art sowohl für die Bestimmung des Massendurchflusses als auch zur Bestimmung der Dichte des strömenden Mediums verwendet. Das ist der Grund dafür, warum es einleitend heißt "Massendurchflußmeßgerät für strömende Medien, das primär nach dem Coriolis-Prinzip arbeitet" und "mit mindestens einem - vorzugsweise CoriolisKräfte und/oder auf Coriolis-Kräften beruhenden Schwingungen erfaßenden - Meßwertaufnehmer". (Insoweit, als mit dem in Rede stehenden Massendurchflußmeßgerät die Dichte des strömenden Mediums bestimmt wird, arbeitet das Massendurchflußmeßgerät natürlich nicht nach dem CoriolisPrinzip.)

Neben dem schon erläuterten Vorteil des erfindungsgemäßen Massendurchflußmeßgerätes - geringe Eigenfrequenz trotz geringer Baulänge - wird dadurch, daß der Schwingungserzeuger über einen Pendelarm an der Leitung angreift, die Leitung also auch - und primär - zu Torsionsschwingungen angeregt wird, erreicht, daß mit dem erfindungsgemäßen Massendurchflußmeßgerät auch die Viskosität des strömenden Mediums bestimmt werden kann. Damit liegt erstmals ein Meßgerät vor, mit dem

    a) der Massendurchfluß über Coriolis-Kräfte bzw. Coriolis-Schwingungen, resultierend aus der Biegeschwingung,

    b) die Dichte über die Eigenfrequenz der Biegeschwingung und

    c) die Viskosität über die Eigenfrequenz der Torsionsschwingung (oder über den für die Torsionsschwingung erforderlichen Energieaufwand)

des strömenden Mediums bestimmt werden kann.

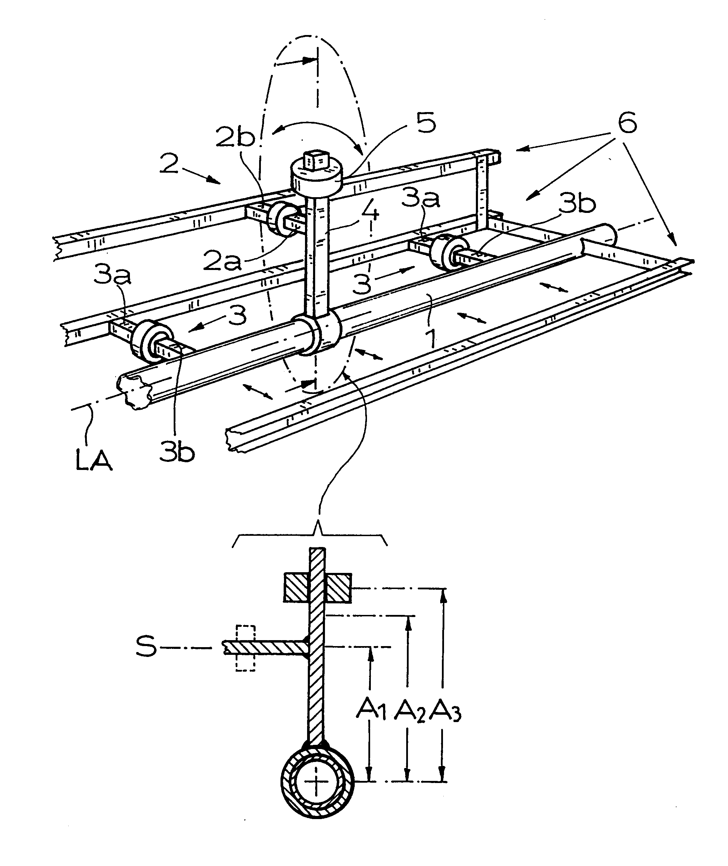

Im einzelnen gibt es nun eine Vielzahl von Möglichkeiten, das erfindungsgemäße Massendurchflußmeßgerät auszugestalten und weiterzubilden. Dazu wird verwiesen einerseits auf die dem Patentanspruch 1 nachgeordneten Patentansprüche, andererseits auf die Beschreibung eines bevorzugten Ausführungsbeispiels in Verbindung mit der Zeichnung.

In der Figur ist nur das eigentliche Meßsystem eines Massendurchflußmeßgeräts für strömende Medien, das nach dem Coriolis-Prinzip arbeitet, dargestellt. Dazu gehören ein nicht dargestellter Leitungseinlauf, eine das strömende Medium führende gerade Leitung 1, ein nicht dargestellter Leitungsauslauf, ein auf die Leitung 1 einwirkender Schwingungserzeuger 2 und ein Meßwertaufnehmer 3.

Wie die Figur zeigt, greift der Schwingungserzeuger 2 nicht unmittelbar an der Leitung 1 an, greift der Schwingungserzeuger 2 vielmehr über einen Pendelarm 4 an der Leitung 1 an. Während bei den bekannten Massendurchflußmeßgeräten, von denen die Erfindung ausgeht, der Schwingungserzeuger die Leitung - zumindest fast ausschließlich - zu Biegeschwingungen anregt, führt bei dem erfindungsgemäßen Massendurchflußmeßgerät das Angreifen des Schwingungserzeugers 2 über einen Pendelarm 4 dazu, daß die Leitung 1 zu Torsionsschwingungen und zu Biegeschwingungen angeregt wird. Die für die Torsionsschwingungen relevante Eigenfrequenz ist wesentlich geringer als die für die Biegeschwingungen relevante Eigenfrequenz und kann beeinflußt werden, ohne die Länge, die Masse und/oder die Steifigkeit der Leitung 1 zu beeinflussen.

Denkbar ist nun zunächst eine Ausführungsform des erfindungsgemäßen Massendurchflußmeßgerätes, bei dem der Abstand $A_1$ zwischen der Längsachse LA der Leitung 1 und dem Angriffspunkt S des Schwingungserzeugers 2 am Pendelarm 4 einstellbar ist; das ist jedoch in der Figur im einzelnen nicht dargestellt.

Bei dem erfindungsgemäßen Massendurchflußmeßgerät kann die für die Torsionsschwingungen relevante Eigenfrequenz über den Pendelarm 4 beeinflußt werden, d. h. über die Masse des Pendelarms 4 und über den eigenfrequenzwirksamen Abstand $A_2$ zwischen der Längsachse LA der Leitung 1 und der Masse des Pendelarms 4. Das ist bei der dargestellten Ausführungsform dadurch realisiert, daß der Pendelarm 4 mit einer in Bezug auf den Abstand $A_3$ zur Längsachse LA der Leitung 1 einstellbaren Eigenfrequenzeinstellmasse 5 versehen ist.

Für das in der Figur dargestellte erfindungsgemäße Massendurchflußmeßgerät gilt, wie für die bekannten Massendurchflußmeßgeräte, von denen die Erfindung ausgeht, daß sowohl der Schwingungserzeuger 2 als auch der Meßwertaufnehmer 3 jeweils aus einem ortsveränderlichen Teil 2a bzw. 3a und einem ortsfesten Teil 2b bzw. 3b bestehen. In der Figur dargestellt ist nun eine Ausführungsform des erfindungsgemäßen Massendurchflußmeßgerätes, bei dem der ortsveränderliche Teil 3a des Meßwertaufnehmers 3 direkt an die Leitung 1 angeschlossen ist. Denkbar ist jedoch auch eine Ausführungsform, bei der der ortsveränderliche Teil des Meßwertaufnehmers in gleicher Weise über einen Mitnehmerarm an die Leitung angeschlossen ist, wie der Schwingungserzeuger 2 über einen Pendelarm 4 an die Leitung 1 angreift. Das kann insbesondere zu einer thermischen Entkopplung zwischen der Leitung 1 und dem ortsveränderlichen Teil 3a des Meßwertaufnehmers 3 herangezogen werden.

Bei dem erfindungsgemäßen Massendurchflußmeßgerät kann im übrigen eine Reihe von Maßnahmen verwirklicht werden, die insbesondere in den DE-OSen 39 16 285 und 40 16 907 beschrieben sind, in der Figur jedoch nicht dargestellt sind. Folglich wird der Offenbarungsgehalt der DE-OSen 39 16 285 und 40 16 907 hiermit ausdrücklich zum Offenbarungsgehalt in Bezug auf die Beschreibung des erfindungsgemäßen Massendurchflußmeßgerätes gemacht. Insbesondere ist in der Figur nicht dargestellt, daß die Leitung an beiden Enden jeweils doppelt gelagert sein kann, was zu einer Reduzierung der Übertragung der Torsions- und Biegeschwingungen nach außen führt.

Schließlich zeigt die Figur insoweit eine bevorzugte Ausführungsform des erfindungsgemäßen Massendurchflußmeßgerätes, als ein torsions- und biegesteifes Tragsystem 6 vorgesehen ist und die Leitung 1, der ortsfeste TEil 2a des Schwingungserzeugers 2 und der ortsfeste Teil 3a des Meßwertaufnehmers 3 an das Tragsystem 6 angeschlossen sind.

In der Figur ist die Lehre der Erfindung bei einer Ausführungsform eines Massendurchflußmeßgerätes dargestellt, die nur eine Leitung 1 aufweist. Die Lehre der Erfindung läßt sich jedoch auf Massendurchflußmeßgeräte anwenden, die zwei Leitungen aufweisen, wobei die beiden Leitungen strömungstechnisch in Reihe oder parallel zueinander liegen können.

Dargestellt ist in der Figur, daß der Pendelarm 4 zu Schwingungen um die Längsachse LA der Leitung 1 angeregt wird. Denkbar ist jedoch auch eine Ausführungsform, bei der der Pendelarm zu Schwingungen in einer Ebene angeregt wird, in der die Längsachse der Leitung liegt. Dabei kann der Pendelarm beidseitig der Leitung vorgesehen sein und können auf jeder Seite der Leitung Eigenfrequenzeinstellmassen vorgesehen sein.

Im übrigen kann bei einem doppelseitigen Pendelarm auch an einer Seite der Schwingungserzeuger angreifen und an der anderen Seite die Eigenfrequenzeinstellmasse vorgesehen sein.

Mit dem erfindungsgemäßen Massendurchflußmeßgerät liegt erstmals ein Meßgerät vor, mit dem der Massendurchfluß über Coriolis-Kräfte bzw. Coriolis-Schwingungen, resultierend aus der Biegeschwingung, die Dichte über die Eigenfrequenz der Biegeschwingung und die Viskosität über die Eigenfrequenz der Torsionsschwingung (oder über den für die Torsionsschwingung erforderlichen Energieaufwand) des strömenden Mediums bestimmt werden kann.

**Patentansprüche**

1. Massendurchflußmeßgerät für strömende Medien, das primär nach dem Coriolis-Prinzip arbeitet, mit einem Leitungseinlauf, mit mindestens einer das strömende Medium führenden, zumindest im wesentlichen geraden Leitung, mit einem Leitungsauslauf, mit mindestens einem auf die Leitung einwirkenden Schwingungserzeuger und mit mindestens einem - vorzugsweise Coriolis-Kräfte und/oder auf Coriolis-Kräften beruhende Coriolis-Schwingungen erfassenden - Meßwertaufnehmer, **dadurch gekennzeichnet,** daß der Schwingungserzeuger (2) über einen Pendelarm (4) an der Leitung (1) angreift.

2. Massendurchflußmeßgerät nach Anspruch 1, dadurch gekennzeichnet, daß der Abstand ($A_1$) zwischen der Längsachse (LA) der Leitung (1) und dem Angriffspunkt (S) des Schwingungserzeugers (2) am Pendelarm (4) einstellbar ist.

3. Massendurchflußmeßgerät nach Anspruch 1 oder 2, dadurch gekennzeichnet, daß der Pendelarm (4) mit einer vorzugsweise in Bezug auf den Abstand ($A_3$) zur Längsachse (LA) der Leitung (1) einstellbaren Eigenfrequenzeinstellmasse (5) versehen ist.

4. Massendurchflußmeßgerät nach einem der Ansprüche 1 bis 3, dadurch gekennzeichnet, daß der ortsveränderliche Teil des Meßwertaufnehmers über einen Mitnehmerarm an die Leitung angeschlossen ist.

5. Massendurchflußmeßgerät nach einem der Ansprüche 1 bis 4, dadurch gekennzeichnet, daß die Leitung an beiden Enden jeweils doppelt gelagert ist.

6. Massendurchflußmeßgerät nach einem der Ansprüche 1 bis 6, dadurch gekennzeichnet, daß ein torsions- und biegesteifes Tragsystem (6) vorgesehen ist und die Leitung (1), der ortsfeste Teil (2a) des Schwingungserzeugers (2) und der ortsfeste Teil (3a) des Meßwertaufnehmers (3) an das Tragsystem (6) angeschlossen sind.

**Europäisches Patentamt**

# EUROPÄISCHER RECHERCHENBERICHT

Nummer der Anmeldung

**EP 91 11 2396**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | WO-A-8 904 463  (FLOWTEC AG) <br> * Seite 5, letzter Absatz - Seite 6, Absatz 1; Abbildung 1 * <br> – – – | 1,4 | G 01 F 1/84 |
| Y | EP-A-0 272 758  (NUOVO PIGNONE-INDUSTRIE) <br> * Seite 15, Zeile 18 - Zeile 34; Abbildungen 16,17 * <br> – – – | 1,4 | |
| A | GB-A-2 001 759  (J.E. SMITH) <br> * Seite 5, Zeile 48 - Zeile 55; Abbildungen 1,9 * <br> – – – | 1 | |
| A | GB-A-2 071 321  (HALLIBURTON COMPANY) <br> * Seite 2, Zeile 30 - Zeile 41; Abbildung 1 * <br> – – – | 1 | |
| A | US-A-4 876 898  (D.R. CAGE) <br> * Spalte 8, Zeile 4 - Zeile 23; Abbildung 3B * <br> – – – – – | 1 | |

| RECHERCHIERTE SACHGEBIETE (Int. Cl.5) |
|---|
| G 01 F |

Der vorliegende Recherchenbericht wurde für alle Patentansprüche erstellt

| Recherchenort | Abschlußdatum der Recherche | Prüfer |
|---|---|---|
| Den Haag | 15 Oktober 91 | HEINSIUS R. |